# EUROPÄISCHE PATENTSCHRIFT

(11) **EP 1 397 602 B1**
(45) Veröffentlichungstag und Bekanntmachung des Hinweises auf die Patenterteilung: **08.02.2006**
(21) Anmeldenummer: 02738136.7
(22) Anmeldetag: 31.05.2002
(51) Int. Cl.: F16F 15/173, F16C 17/22

(54) **DREHSCHWINGUNGSDÄMPFER**
TORSIONAL VIBRATION DAMPER
AMORTISSEUR DE VIBRATIONS TORSIONNELLES

(30) Priorität: 31.05.2001 DE 10126477
(43) Veröffentlichungstag der Anmeldung: 17.03.2004
(73) Patentinhaber: Hasse & Wrede GmbH, 12347 Berlin (DE)
(72) Erfinder: HERRMANN, Jens, 14165 Berlin (DE)
(74) Vertreter: Mattusch, Gundula
(86) Internationale Anmeldenummer: PCT/EP2002/005997
(87) Internationale Veröffentlichungsnummer: WO 2002/097297

(56) Entgegenhaltungen:
- EP-A- 0 745 784
- DE-A- 1 525 304
- DE-A- 4 222 184
- US-A- 3 929 392
- PATENT ABSTRACTS OF JAPAN vol. 1997, no. 11, 28. November 1997 (1997-11-28) & JP 09 184513 A (NTN CORP), 15. Juli 1997 (1997-07-15)

## Beschreibung

Die Erfindung betrifft einen Drehschwingungsdämpfer nach dem Oberbegriff des Anspruches 1.

Der Scherspalt-Tilger, traditionell Visco- oder Drehschwingungsdämpfer genannt, wird zumeist an der Kraftgegenseite von Dieselmotor-Kurbelwellen angeflanscht, deren Drehschwingungsamplituden er vermindert. Dank oszillierender Scherung des Dämpfungsmediums Siliconöl im Inneren des Tilgers wird Schwingenergie in Wärme umgewandelt, die durch Konvektion an die umgebende Luft oder ein anderes Kühlmedium abgegeben wird.

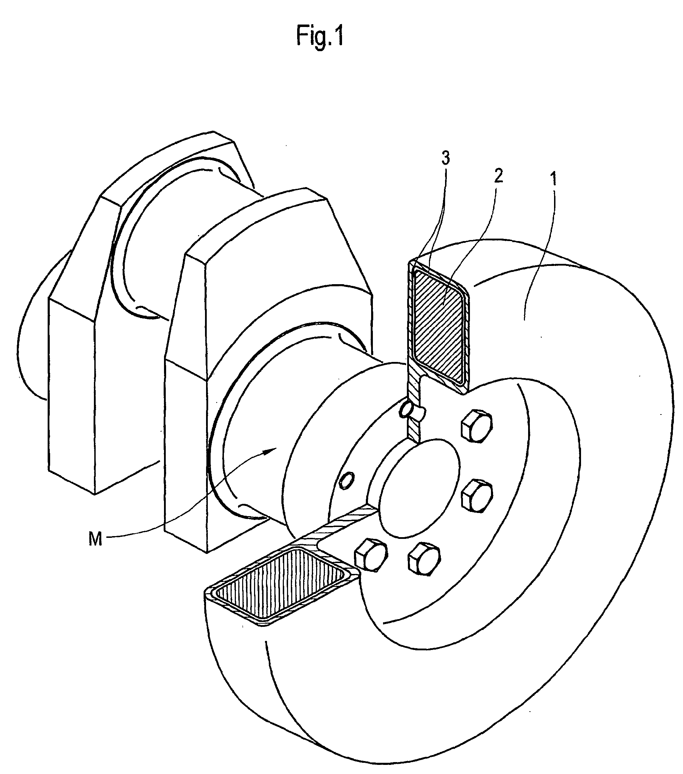

Scherspalt-Tilger bestehen üblicherweise aus einem ringförmigen Gehäuse (1 in Fig. 1), das eine "Schwungring" genannte Sekundärmasse 2 umschließt. Das Gehäuse wird drehsteif mit der Kurbelwelle M verbunden.

Tilgergehäuse und Schwungring folgen der mittleren Drehgeschwindigkeit der Kurbelwelle ohne Schlupf. Ihre Drehschwingungen hingegen, die sich der gleichmäßigen Drehung überlagern, teilen sich zunächst nur dem Gehäuse mit. Der Schwungring würde gleichförmig rotieren, wenn ihn nicht das Dämpfungsmedium, das den engen Scherspalt 3 ausfüllt, ans Gehäuse ankoppeln würde. Diese Kopplung ist elastisch und dämpfungsbehaftet. Infolgedessen treten zwischen Gehäuse und Schwungring Relativ-Drehwinkel von bis zu ± 1 Winkelgrad im Takte der erregenden Wellenschwingungen auf.

Da sich der Schwungring also gegenüber dem Gehäuse schwingend drehen kann, benötigt er Führungselemente.

Aus der EP-PS 0 745 784 B1 ist eine Schwungringlagerung nach Art einer "Bundbuchse" aus Kunststoff mit L-förmigem Querschnitt bekannt. Zur Ausstattung eines Scherspalt-Tilgers gehört ein Paar solcher Bundbuchsen, die ohne Vorspannung, d.h. lose, zwischen Gehäuse und Ring eingefügt werden, so daß beide Metallteile bei Relativbewegungen auf der Bundbuchse mit kleinstmöglichem Reibwert gleiten.

Mit den Bundbuchsen nach EP-PS 0 745 784 B1 werden die besten Voraussetzungen für eine unkomplizierte, vollautomatische Montage von Scherspalt-Tilgern geschaffen. Es zeigte sich aber, daß die Bundbuchsen noch nicht allen Anforderungen an eine wirtschaftliche Fertigung entsprachen.

Insbesondere die geschlossenen Winkeliinge nach dem Anspruch 2 der EP-PS 0 745 784 B1 sind hinsichtlich der allzu unterschiedlichen linearen Wärmeausdehnungskoeffizienten der beteiligten Materialien nicht optimal:

| | |
|---|---|
| Stahl | α = 0,0115 mm/(m x °C) |
| Gußeisen | α = 0,0105 mm/(m x °C) |
| PA 66 | α = 0,070 mm/(m x °C) |
| PTFE | α = 0,130 mm/(m x °C). |

Je nach dem anzunehmenden Temperaturbereich, von arktischen -50 °C über +20 °C bei der Montage bis zu +100 °C im Motor, wachsen Kunststoffringe mit z.B. 160 mm Lagerdurchmesser um ΔI = 5 bis 9 mm gegenüber Gehäuse und Schwungring. Eine solche Längenzunähme würde nicht ohne Zwängen oder Stauchen des Buchsenquerschnitts abgehen, sie kann nicht hingenommen werden.

Der gerade oder schräg geschlitzte Stoß der Bundbuchsen nach EP-PS 0 745 784, Ansprüche 2 und 3, war weit genug gehalten, um den temperaturbedingten Längenzuwachs des Kunststoffs zwanglos auszugleichen. Als nachteilig erwies sich aber die unverträgliche Labilität der aufgeschnittenen Winkelringe. Sie verhakten und verformten sich beim Transport und widersetzten sich den Greifern der Montageeinrichtungen.

Die vorliegende Erfindung hat die Aufgabe, den gattungsgemäßen Drehschwingungsdämpfer mit einer Bundbuchse als Lagereinrichtung derart auszubilden, daß sie den geforderten Längenausgleich bewerkstelligt und zugleich genügend formstabil ist, um von einer vollautomatischen Fertigungsanlage verarbeitet werden zu können.

Die Erfindung löst diese Aufgabe durch den Gegenstand des Anspruches 1. Danach ist die Stoßstange durch mindestens einen oder mehrere Materialstege überbrückt, welche sich aber nicht über die genannte Breite der Bundbuchse erstrecken.

Die Materialstege ermöglichen in einfacher Weise eine leichte Lagerbarkeit und Transportfähigkeit der Bundbuchsen und erleichtern auch entscheidend die Montage, da verhindert wird, daß sich die geschlitzten Ringe verformen und verwinden.

Vorteilhafte Weiterbildungen der Erfindung sind den Unteransprüchen zu entnehmen.

Zweierlei Lösungswege bieten sich im wesentlichen an. Die Stoßlücke der Bundbuchse wird durch Stege überbrückt, die
- bei Betriebstemperatur brechen oder
- sich bei Betriebstemperatur elastisch-plastisch verformen.

Vorzugsweise sind die Bundbuchsen L-förmig. Die Erfindung eignet sich theoretisch aber auch für geschlitzte einfache Axial- oder Radiallagerringe.

Nachfolgend wird die Erfindung unter Bezug auf die Zeichnung näher beschrieben. Es zeigt:
- Figur 1: einen Scherspalt-Tilger nach dem Stand der Technik,
- Figur 2: den Querschnitt des Scherspalt-Tilgers mit einem Paar Bundbuchsen,
- Figur 3: eine geschlossene Bundbuchse in axonometrischer Darstellung,
- Figur 4: eine geschlitzte Bundbuchse mit Reißstegen,
- Figur 5: eine geschlitzte Bundbuchse mit Mäandersteg,
- Figur 6: eine geschlitzte Bundbuchse mit Folienstegen.

Figur 1 zeigt einen Scherspalt-Tilger mit dem ringförmigen Gehäuse 1, das den Schwungring 2 umschließt. Das Dämpfergehäuse 1 ist drehsteif mit einer Maschinenwelle M - einer Motorkurbelwelle - verbunden, deren Drehschwingungen gedämpft werden. Zwischen Gehäuse 1 und Schwungring 2 befindet sich der mit einem Dämpfungsmedium (Fluid) gefüllt Scherspalt 3.

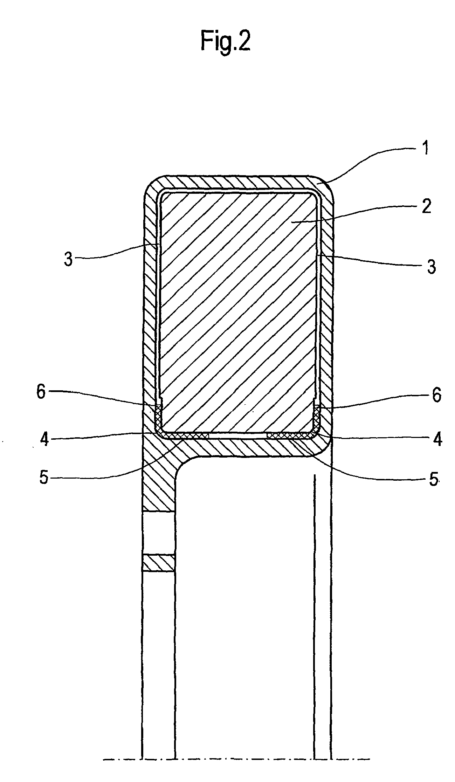

Gemäß Figur 2 wird der Schwungring 2 durch zwei Lagereinrichtungen - hier Bundbuchsen 4 mit L-förmigem Querschnitt - geführt.

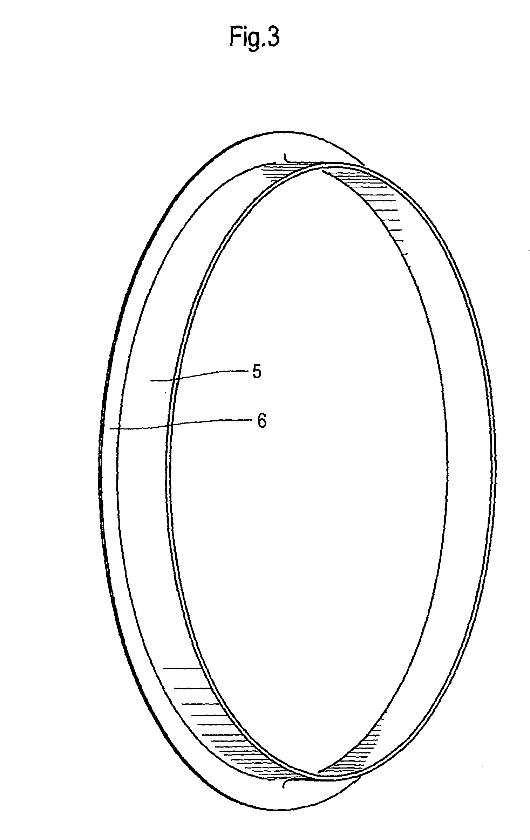

Zur Information zeigt Figur 3 eine geschlossene, also ungeschlitzte Bundbuchse. Die Radiallagerpartie 5 führt den Schwungring zentrisch zur Rotationsachse, während die Axiallagerpartie 6, zusammen mit jener der zweiten Bundbuchse im Tilger, den Schwungring in Achsrichtung hält. Der Vollständigkeit halber sei erwähnt, daß die Wandstärken der Radial- und Axiallagerpartien einerseits die Lagerspalte zwischen Gehäuse 1 und Schwungring 2 ausfüllen, andererseits auch die lichte Weite des Scherspalts 3 aufrechterhalten.

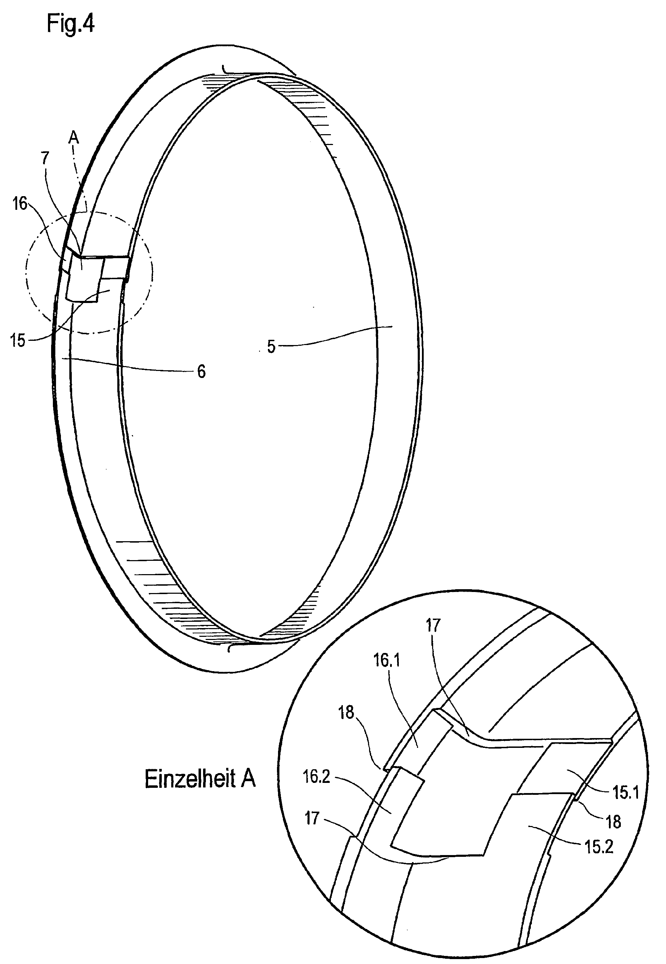

Die Bundbuchse von Figur 4 weist einen rechtwinkligen Stoß 7 auf, der von den beiden Stegen 15, 16 überbrückt wird. Der Steg 15 liegt in der Flucht der Radiallagerpartie 5, der Steg 16 in der Flucht der Axiallagerpartie 6. Beide Stege enthalten eine Sollbruchstelle 18. Wenn sich bei steigender Tilgertemperatur die beiden Stirnflächen 17 des Stoßes einander annähern, reißen die Reißstege in den Sollbruchstellen und die Stegreste 15.1 und 15.2 sowie 16.1 und 16.2 gleiten aufeinander. Die summierte Wandstärke der voreinander gleitenden Stegreste entspricht der Wandstärke der Radiallager- bzw. der Axiallagerpartie, so daß die Reststücke zwanglos im Lagerspalt Platz finden.

Statt der beiden beschriebenen Reißstege ist auch nur ein einzelner Reißsteg denkbar, der entweder in der Radiallagerpartie oder in der Axiallagerpartie angeordnet ist.

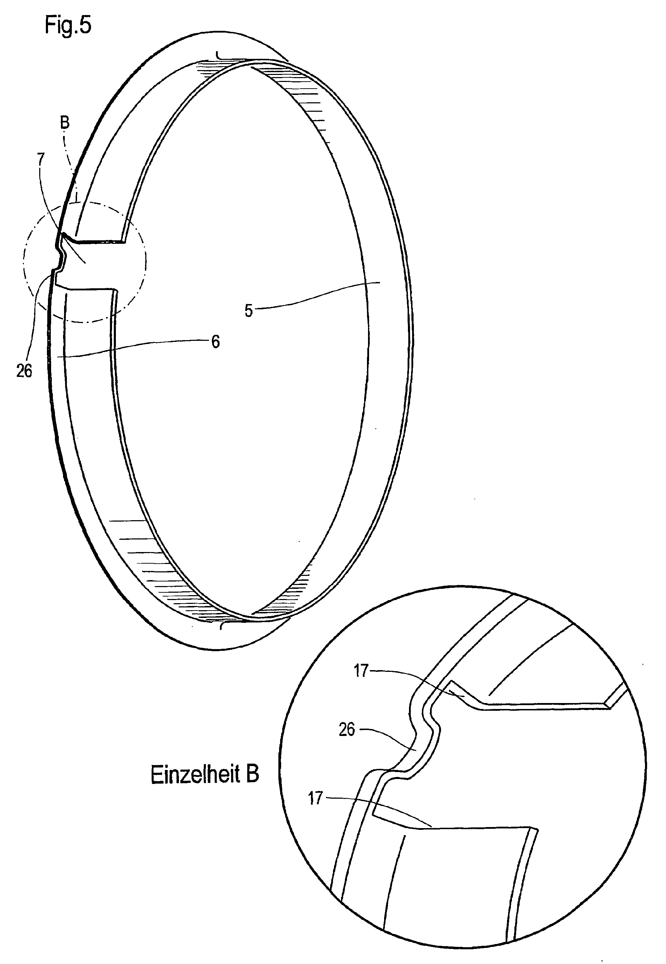

Figur 5 zeigt eine jener Stoßbrücken, die sich mit steigender oder fallender Tilgertemperatur elastisch-plastisch verformen. In der Flucht der Axiallagerpartie 6 erstreckt sich ein Mäanderband 26 aus dem Werkstoff der Bundbuchse. Seine Wandstärke ist gleich oder kleiner als jene der Axiallagerpartie, so daß es zwanglos im Axiallagerspalt des Tilgers Platz findet. Wenn sich die Stirnflächen 17 des Stoßes temperaturbedingt einander annähern, schiebt sich der Mäander zusammen ohne auszuknicken, da er vom Lagerspalt eingefaßt wird. Dementsprechend streckt sich der Mäander, wenn sich die Stoßkanten voneinander entfernen.

In Figur 5 ist beispielhaft ein in der Axiallagerpartie liegender Mäandersteg 26 dargestellt. Ein gleichartiger Steg ist alternativ auch für die Radiallagerpartie vorstellbar, bei Bedarf können Mäanderstege sowohl in der Radiallager- als auch in der Axiallagerpartie angeordnet werden.

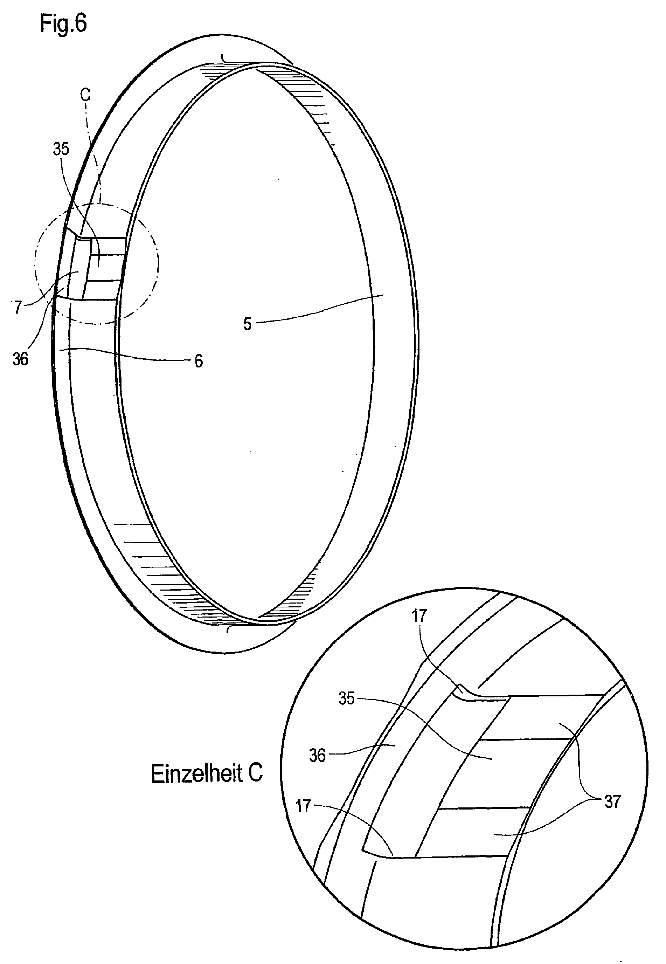

Bei der Bundbuchse von Figur 6 sind die Radiallagerpartie 5 und die Axiallagerpartie 6 im Bereich der Stoßfuge 7 bis auf wenige Zehntelmillimeter abgemagert. Diese Schwachstellen gleichen dünnwandigen Folien; sie heißen deshalb Folienstege 35 und 36. Bei einer Annäherung der Stirnflächen 17 dank thermischer Längenänderung knicken die Folienstege aus. Zunächst finden sie im radialen und axialen Lagerspalt Platz. Setzt sich die Stauchung weiter fort, können die Folienpartien an den benachbarten Lagerflächen zur Anlage kommen. Der unvermeidlich einsetzende Abtrag von Buchsenwerkstoff wird ohne nachteilige Folgen für die Tilgerfunktion in Kauf genommen.

Um das geschilderte Aufwölben der Folienpartien sicherzustellen und zugunsten einer biegedauerfesten Anbindung der Folienstege sind deren Einspannstellen rampenartig (37) ausgebildet.

Sollten sich die Stirnflächen 17 bei arktisch tiefen Temperaturen voneinander entfernen, würden die Folienpartien ohne nachteilige Folgen für die Schwungringlagerung aufreißen.

Anstelle der beiden Folienstege 35, 36 von Figur 6 ist auch ein einzelner Foliensteg entweder in der Radiallagerpartie oder in der Axiallagerpartie denkbar.

Außer den beschriebenen Einrichtungen zum nachgiebigen Überbrücken des Bundbuchsenstoßes 7 können auch andere Gebilde angeordnet sein, entweder integriert aus dem Werkstoff der Bundbuchse oder aus einem anderen Material. Die zu überbrückende Stoßfuge kann "gerade", also achsparallel und achsnormal ausgeführt sein; ihre Schnittkanten können auch unter beliebigen Winkeln verlaufen.

Die aufgeführten erfinderischen Gedanken beziehen sich nicht nur auf die Bundbuchsen der Innenlagerung nach Figur 2, sondern auch auf außen geführte Schwungringe mit geschlitzten Bundbuchsen.

### Bezugszeichenliste

- 1: Dämpfergehäuse
- 2: Schwungring
- 3: Scherspalt
- 4: Bundbuchse
- 5: Radiallagerpartie
- 6: Axiallagerpartie
- 7: Stoß
- 15: Reißsteg
- 15.1: Stegrest
- 15.2: Stegrest
- 16: Reißsteg
- 16.1: Stegrest
- 16.2: Stegrest
- 17: Stirnfläche
- 18: Sollbruchstelle
- 26: Mäandersteg
- 35: Foliensteg
- 36: Foliensteg
- 37: Rampe

## Patentansprüche

1. Viskositäts-Drehschwingungsdämpfer mit Bundbuchsen (4) zum Führen eines Schwungringes (2) in einem Dämpfergehäuse (1), wobei die Bundbuchsen (4) den Schwungring (2) gegenüber dem Tilgergehäuse (1) führen und lose, d.h. ohne Vorspannung zwischen Gehäuse (1) und Ring (2) eingesetzt sind und zugleich vorgegebene Scherspalte (3) zwischen Gehäuse (1) und Ring (2) aufrechterhalten, aus Kunststoff bestehen und einen vorzugsweise L-förmigen Querschnitt aufweisen, sowie an einer Stelle des Umfangs eine Stoßfuge (7) aufweisen, **dadurch gekennzeichnet, dass** die Stoßfuge (7) durch mindestens einen oder mehrere Materialstege (15, 16, 20, 35, 36) überbrückt ist, wobei der Materialsteg (15, 16, 26, 35, 36) die Stoßfuge (7) nur abschnittsweise durchsetzt.

2. Viskositäts-Drehschwingungsdämpfer nach Anspruch 1, **dadurch gekennzeichnet, daß** die Stoßfuge (7) durch solche Materialstege überbrückt wird, die bei thermischer Längenzunahme der Buchse aufreißen.

3. Viskositäts-Drehschwingungsdämpfer nach Anspruch 1, **dadurch gekennzeichnet, daß** die Stoßfuge (7) durch solche Materialstege überbrückt ist, die sich bei thermischer Längenzunahme der Buchse elastisch-plastisch verformen.

4. Viskositäts-Drehschwingungsdämpfer nach Anspruch 2, **dadurch gekennzeichnet, daß** die StoBfuge (7) durch zwei als Reißstege (15, 16) ausgebildete Materialstege überbrückt ist, die in der Flucht der Radiallagerpartie (5) und in der Flucht der Axiallagerpartie (6) liegen.

5. Viskositäts-Drehschwingungsdämpfer nach Anspruch 2, **dadurch gekennzeichnet, daß** die Stoßfuge (7) durch einen als Reißsteg ausgebildeten Materialsteg überbrückt ist, der in der Flucht der Radiallagerpartie (5) oder in der Flucht der Axiallagerpartie (6) liegt.

6. Viskositäts-Drehschwingungsdämpfer nach Anspruch 3, **dadurch gekennzeichnet, daß** die Stoßfuge (7) durch einen als Mäandersteg (26) ausgebildeten Materialsteg überbrückt ist, der in der Flucht der Radiallagerpartie (5) liegt.

7. Viskositäts-Drehschwingungsdämpfer nach Anspruch 3, **dadurch gekennzeichnet, daß** die Stoßfuge (7) durch einen als Mäandersteg (26) ausgebildeten Materialsteg überbrückt ist, der in der Flucht der Axiallagerpartie (6) liegt.

8. Viskositäts-Drehschwingungsdämpfer nach den Ansprüchen 6 und 7, **dadurch gekennzeichnet, daß** die Stoßfuge (7) durch zwei als Mäanderstege (26) ausgebildete Materialstege überbrückt ist, die in der Flucht der Radiallagerpartie (5) und der Axiallagerpartie (6) liegen.

9. Viskositäts-Drehschwingungsdämpfer nach Anspruch 3, **dadurch gekennzeichnet, daß** die Stoßfuge (7) durch zwei als Folienstege (35, 36) ausgebildete Materialstege überbrückt ist, die in der Flucht der Radiallageipartie (5) und in der Flucht der Axiallagerpartie (6) liegen.

10. Viskositäts-Drehschwingungsdämpfer nach Anspruch 9, **dadurch gekennzeichnet, daß** die Stoßfuge (7) durch einen als Foliensteg ausgebildeten Materialsteg überbrückt ist, der entweder in der Flucht der Radiallagerpartie (5) oder in der Flucht der Axiallagerpartie (6) liegt.

## Claims

1. Viscosity-type torsional vibration damper with flanged sleeves (4) for guiding a rotating ring (2) in a damper housing (1), which flanged sleeves (4) guide the rotating ring (2) relative to the damper housing (1) and are inserted loosely, i.e. without any pre-tensioning, between the housing (1) and ring (2) and simultaneously maintain a predefined shearing gap (3) between the housing (1) and ring (2), are made from plastic and have a preferably L-shaped cross-section, having a butt joint (7) at a point of the circumference, **characterised in that** the butt joint (7) is bridged by at least one or more material webs (15, 16, 20, 35, 36), which material web (15, 16, 26, 35, 36) extends into only some parts of the butt joint (7).

2. Viscosity-type torsional vibration damper as claimed in claim 1, **characterised in that** the butt joint (7) is bridged by material webs which tear open in the event of an increase in length due to heat.

3. Viscosity-type torsional vibration damper as claimed in claim 1, **characterised in that** the butt joint (7) is bridged by material webs which are elastically-plastically deformed if the length of the sleeve increases due to heat.

4. Viscosity-type torsional vibration damper as claimed in claim 2, **characterised in that** the butt joint (7) is bridged by two material webs in the form of tearing webs (15, 16) which lie in alignment with the radial bearing part (5) and in alignment with the axial bearing part (6).

5. Viscosity-type torsional vibration damper as claimed in claim 2, **characterised in that** the butt joint (7) is bridged by a material web in the form of a tearing web which lies in alignment with the radial bearing part (5) or in alignment with the axial bearing part (6).

6. Viscosity-type torsional vibration damper as claimed in claim 3, **characterised in that** the butt joint (7) is bridged by a material web in the form of a meandering web (26) which lies in alignment with the radial bearing party (5).

7. Viscosity-type torsional vibration damper as claimed in claim 3, **characterised in that** the butt joint (7) is bridged by a material web in the form of a meandering web (26) which lies in alignment with the axial bearing part.

8. Viscosity-type torsional vibration damper as claimed in claims 6 and 7, **characterised in that** the butt joint (7) is bridged by material webs in the form of meandering webs (26) which lie in alignment with the radial bearing part (5) and the axial bearing part (6).

9. Viscosity-type torsional vibration damper as claimed in claim 3, **characterised in that** the butt joint (7) is bridged by material webs in the form of hinge webs (35, 36) which lie in alignment with the radial bearing part (5) and in alignment with the axial bearing part (6).

10. Viscosity-type torsional vibration damper as claimed in claim 9, **characterised in that** the butt joint (7) is bridged by a material web in the form of a hinge web which lies either in alignment with the radial bearing part (5) or in alignment with the axial bearing part (6).

## Revendications

1. Amortisseur visqueux de vibrations de torsion comportant des coussinets (4) à collet pour guider une bague (2) d'inertie dans un boîtier (1) d'amortisseur, les coussinets (4) à collet guidant la bague (2) d'inertie par rapport au boîtier (1) d'amortisseur et sont installés de manière lâche, c'est-à-dire sans précontrainte, entre le boîtier (1) et la bague (2), qu'ils maintiennent en même temps des interstices (3) prescrits de cisaillement entre le boîtier (1) et la bague (2), qu'ils sont réalisés en matière plastique et qu'ils possèdent de préférence une section en L et un joint (7) de contact en un point de leur pourtour, **caractérisé en ce que** le joint (7) de contact est couvert par au moins une ou plusieurs brides (15, 16, 20, 35, 36) de matériau, la bride (15, 16, 26, 35, 36) de matériau ne traversant que sectoriellement le joint (7) de contact.

2. Amortisseur visqueux de vibrations de torsion suivant la revendication 1, **caractérisé en ce que** le joint (7) de contact est couvert par des brides de matériau qui se rompent en cas d'augmentation de la longueur du coussinet pour des raisons thermiques.

3. Amortisseur visqueux de vibrations de torsion suivant la revendication 1, **caractérisé en ce que** le joint (7) de contact est couvert par des brides de matériau qui se déforment de façon élastoplastique en cas d'augmentation de la longueur du coussinet pour des raisons thermiques.

4. Amortisseur visqueux de vibrations de torsion suivant la revendication 2, **caractérisé en ce que** le joint (7) de contact est couvert par deux brides de matériau conçues comme brides (15, 16) de rupture, qui sont disposées dans l'alignement de la partie (5) formant palier radial et dans l'alignement de la partie (6) formant palier axial.

5. Amortisseur visqueux de vibrations de torsion suivant la revendication 2, **caractérisé en ce que** le joint (7) de contact est couvert par une bride de matériau conçue comme bride de rupture, qui est disposée dans l'alignement de la partie (5) formant palier radial ou dans l'alignement de la partie (6) formant palier axial.

6. Amortisseur visqueux de vibrations de torsion suivant la revendication 3, **caractérisé en ce que** le joint (7) de contact est couvert par une bride de matériau conçue comme bride (26) sinueuse, qui est disposée dans l'alignement de la partie (5) formant palier radial.

7. Amortisseur visqueux de vibrations de torsion suivant la revendication 3, **caractérisé en ce que** le joint (7) de contact est couvert par une bride de matériau conçue comme bride (26) sinueuse, qui est disposée dans l'alignement de la partie (6) formant palier axial.

8. Amortisseur visqueux de vibrations de torsion suivant les revendications 6 et 7, **caractérisé en ce que** le joint (7) de contact est couvert par deux brides de matériau conçues comme brides (26) sinueuse, qui sont disposées dans l'alignement de la partie (5) formant palier radial et de la partie (6) formant palier axial.

9. Amortisseur visqueux de vibrations de torsion suivant la revendication 3, **caractérisé en ce que** le joint (7) de contact est couvert par deux brides de matériau conçues comme brides (35, 36) en lamelle, qui sont disposées dans l'alignement de la partie (5) formant palier radial et dans l'alignement de la partie (6) formant palier axial.

10. Amortisseur visqueux de vibrations de torsion suivant la revendication 9, **caractérisé en ce que** le joint (7) de contact est couvert par une bride de matériau conçue comme bride en lamelle, qui est disposée soit dans l'alignement de la partie (5) formant palier radial, soit dans l'alignement de la partie (6) formant palier axial.
